# EUROPÄISCHE PATENTSCHRIFT

(11) **EP 4 031 057 B1**
(45) Veröffentlichungstag und Bekanntmachung des Hinweises auf die Patenterteilung: **21.08.2024**
(21) Anmeldenummer: 20775840.0
(22) Anmeldetag: 17.09.2020
(51) Int. Cl.: A61C 3/025, A61C 17/02, A61F 2/00, A61P 43/00, H01L 27/00

(54) **DÜSENELEMENT UND PULVERSTRAHLGERÄT**
NOZZLE ELEMENT AND POWDER JET DEVICE
ÉLÉMENT DE BUSE ET DISPOSITIF DE JET DE POUDRE

(30) Priorität: 17.09.2019 DE 102019125019
(43) Veröffentlichungstag der Anmeldung: 27.07.2022
(73) Patentinhaber: Ferton Holding S.A., 2800 Delémont (CH)
(72) Erfinder: BEANI, Florent Jean-Claude Georges, 01170 Gex (FR); DONNET, Marcel, 01630 Saint Jean de Gonville (FR); DUPOURQUE, Lenny, 1820 Montreux (CH); LAURENT, Alain, 39100 Choisey (FR)
(74) Vertreter: Müller Schupfner & Partner Patent- und Rechtsanwaltspartnerschaft mbB (Muc)
(86) Internationale Anmeldenummer: PCT/EP2020/075934
(87) Internationale Veröffentlichungsnummer: WO 2021/053052

(56) Entgegenhaltungen:
- US-A- 4 696 644
- US-A- 5 941 702
- US-A1- 2016 113 736

## Beschreibung

Die vorliegende Erfindung betrifft ein Düsenelement, ein Pulverstrahlgerät und ein Verfahren zur Nutzung eines solchen Pulverstrahlgeräts.

Aus dem Stand der Technik sind Pulverstrahlgeräte hinlänglich bekannt. Diese dienen zur Zahnreinigung unter Verwendung eines Pulverstrahls, der als Pulver-Gas-Gemisch auf die Zahnoberfläche trifft und sich als wirkungsvolles Mittel erwiesen hat, Biofilme und dentale Verfärbungen zu entfernen.

Wesentliche Bestandteile eines solchen Pulverstrahlgeräts sind ein Handgerät mit einem Düsenelement, an dessen Ausgang der Pulverstrahl das Handgerät verlässt, und z. B. eine Basisstation mit einer Pulverkammer. Das Pulver wird dabei von der Pulverkammer, beispielsweise austauschbar an der entsprechenden Basisstation montiert, bereitgestellt. Hierzu wird die Pulverkammer derart unter Druck gesetzt, dass das in der Pulverkammer entstehende Pulver-Gas-Gemisch genug Energie besitzt, um zum Düsenelement zu gelangen und das Düsenelement derart als Pulver-Gas-Strahl zu verlassen, dass ein gewünschter Reinigungseffekt an der Zahnoberfläche bewirkt wird.

Wegen der vergleichsweise hohen Drücke in der Pulverkammer ist es erforderlich, dass die Pulverkammer mit entsprechend dicken Wänden versehen wird und einen ausreichend abdichtenden und demnach entsprechend aufwendig ausgestalteten Verschluss oder Klemmmechanismus aufweist, der dem Druck in der Pulverkammer während des Betriebs standhält und somit den Sicherheitserfordernissen im Betrieb des Pulverstrahlgeräts genügt. Gleichzeitig weisen Basisstationen bzw. Pulverkammern in der Regel im Schnittstellenbereich zwischen Pulverkammer und Basisstation ein Quetschventil auf, das mit der nötigen Vorsicht zu handhaben ist.

Aus der WO 2018/108 622 ist es bekannt, das Düsenelement derart auszulegen, dass das am Ausgang des Handstücks austretende Pulver-Gas-Gemisch von einem Flüssigkeitsmantel umgeben wird, der beim Auftreffen des Pulver-Gas-Gemischs dafür sorgt, dass einer Staubentwicklung an der Zahnoberfläche beim Einsatz des Pulverstrahlgeräts entgegengewirkt wird. Außerdem kann das Pulver nach der Anwendung ausgespült werden.

Aus der US 4,696,644 ist ein Pulverstrahlgerät bekannt, bei dem mittels eines Unterdrucks in der Düse Pulver in einen Düsenabschnitt angesaugt wird. Eine Vorrichtung, mit der der Pulver-Gas-Mischvorgang mittels eines zusätzlichen Gaskanals zumindest unterstützt wird, ist auch aus der US 2016 0 113 736 A1 oder US 5, 941 ,702 bekannt.

Es ist eine Aufgabe der vorliegenden Erfindung, ein Düsenelement und ein Pulverstrahlgerät bereitzustellen, die gegenüber den aus dem Stand der Technik bekannten Düsen bzw. Pulverstrahlgeräten verbessert sind, insbesondere in Hinblick auf ihre konstruktive Ausgestaltung und Handhabung im Einsatz.

Diese Aufgabe wird gelöst durch ein Düsenelement gemäß Anspruch 1 und ein Pulverstrahlgerät gemäß Anspruch 7. Weitere Vorteile und Eigenschaften der Erfindung ergeben sich aus den Unteransprüchen sowie der Beschreibung und den beigefügten Figuren.

Gemäß einem ersten Aspekt betrifft die vorliegende Erfindung ein Düsenelement für ein Pulverstrahlgerät, das für Zahnbehandlungen vorgesehen ist, umfassend
- einen Primärkanal zur Führung eines Pulver-Gas-Gemischs entlang einer Strömungsrichtung und
- vorzugsweise einen Sekundärkanal zur Führung eines Fluids, wobei insbesondere der Sekundärkanal den Primärkanal zumindest abschnittsweise derart umgibt, dass am Ausgang des Düsenelements das aus dem Primärkanal, insbesondere entlang der Strömungsrichtung, austretende Pulver-Gas-Gemisch von dem aus dem Sekundärkanal austretende Fluid ummantelt wird,
wobei das Düsenelement einen ersten Einlassbereich zum Einführen eines Pulvermediums, insbesondere in Gestalt einer Vorstufe des Pulver-Gas-Gemischs, und einen zweiten Einlassbereich zum Einführen eines Gasmediums, umfasst, wobei der zweite Einlassbereich derart konfiguriert ist, dass während des Betriebs des Düsenelements beim Einleiten des Gasmediums über den zweiten Einlassbereich im Primärkanal, insbesondere lokal, in Strömungsrichtung gesehen hinter dem ersten Einlassbereich ein Unterdruck zum Ansaugen des Pulvermediums ausbildbar ist bzw. ausgebildet wird.

Im Gegensatz zu den aus dem Stand der Technik bekannten Pulverstrahlgeräten ist es erfindungsgemäß vorgesehen, dass das Düsenelement derart ausgelegt ist, dass im Betrieb bzw. Einsatz des Pulverstrahlgerätes im Primärkanal, insbesondere hinter dem ersten Einlassbereich, über den das Pulvermedium in den Primärkanal eingeführt wird, ein Unterdruck ausgebildet wird, der insbesondere derart groß ist, dass das Pulvermedium aus der Pulverkammer angesaugt wird und ausreichend kinetische Energie vorweist, um das Düsenelement als Pulverstrahl zu verlassen und wirkungsvoll die Zahnoberfläche des zu behandelnden Zahns zu reinigen. Dadurch ergibt sich insbesondere der Vorteil gegenüber den aus dem Stand der Technik bekannten Pulverstrahlgeräten, dass auf eine entsprechend dicke Wandung oder einen komplizierten Koppelmechanismus bzw. Anschlussmechanismus der Pulverkammer an der Basisstation verzichtet werden kann. Ein entsprechend aufwendiges Unterdrucksetzen der Pulverkammer mit den entsprechenden konstruktiven Maßnahmen ist schließlich nicht mehr erforderlich. Auch muss das Pulver in der Pulverkammer nicht noch aufwändig gleichmäßig verwirbelt werden, sondern es reicht aus, das Pulver lediglich mit dem Gas wegzufördern in Richtung der Düse. Dies vereinfacht in vorteilhafter Weise die konstruktive Ausgestaltung des gesamten Pulverstrahlgeräts, insbesondere der Pulverkammer, die vorzugsweise als austauschbares Element bzw. als Verschleißteil bzw. Verbrauchsteil ausgebildet ist.

Dabei handelt es sich insbesondere bei dem Düsenelement um ein solches Düsenelement, das in einem Pulverstrahlgerät, insbesondere einem Handgerät eines Pulverstrahlgeräts, den Ausgang bildet, über den das Pulver-Gas-Gemisch das Düsenelement verlässt. Grundsätzlich ist es vorgesehen, dass mittels des anspruchsgemäßen Düsenelements auf eine weitere Gasquelle bzw. Druckquelle an oder in Strömungsrichtung gesehen vor der Pulverkammer verzichtet werden kann bzw. auf eine Druckquelle, die die Pulverkammer unter Druck setzt. D. h. das Pulverstrahlgerät ist vorzugsweise an der Basisstation bzw. der Pulverkammer druckquellenfrei. Es ist alternativ auch vorstellbar, dass mittels des Unterdrucks, der im Primärkanal gebildet wird, eine eventuell weitere Druckquelle an der Pulverkammer unterstützt wird bzw. entlastet wird, sodass der aufgebrachte Druck im Bereich der Pulverkammer reduziert werden kann, was ebenfalls zu einer Vereinfachung der Ausgestaltung der Pulverkammer bzw. des Koppelmechanismus der Pulverkammer an die Basisstation führen kann.

Bei dem Pulvermedium handelt es sich vorzugsweise um ein abrasives Pulver, das in der Pulverkammer gelagert ist. Dabei wird das Pulvermedium insbesondere in Form einer Vorstufe des Pulver-Gas-Gemisches im ersten Einlassbereich auch als Pulver-Gas-Gemisch zur Verfügung gestellt, da automatisch bereits ein geringer Anteil an Gas beim Ansaugen des Pulvermediums mitgeführt wird. Allerdings entspricht diese Vorstufe des Pulver-Gas-Gemisches in seiner Zusammensetzung, das heißt seinen Anteilen an Pulver und Gas, nicht derjenigen Zusammensetzung des Pulver-Gas-Gemisches, das den Ausgang des Düsenelements verlässt. Weiterhin ist es bevorzugt vorgesehen, dass das Pulver-Gas-Gemisch den Ausgang in Strömungsrichtung linear verlässt. Das heißt: Es erfolgt vorzugsweise kein Abknicken oder Abwinkeln im ausgangsseitigen Bereich des Düsenelements. Weiterhin ist es bevorzugt vorgesehen, dass der erste Einlassbereich und der zweite Einlassbereich an einem stirnseitigen Ende des Primärkanals ausgebildet sind, insbesondere dem stirnseitigen Ende des Primärkanals, der dem Ausgang des Düsenelements abgewandt ist. Mit anderen Worten: das Gasmedium und/oder das Pulvermedium werden dem Primärkanal an dessen dem Ausgang des Düsenelements abgewandten Ende zugeführt.

Um den Unterdruck ausbilden zu können bzw. im Einsatz bzw. im Betrieb auszubilden, ist es vorzugsweise vorgesehen, dass der zweite Einlassbereich derart ausgelegt bzw. konfiguriert ist, dass das über den zweiten Einlassbereich in den Primärkanal eingefügte Gasmedium zumindest abschnittsweise an einer Innenseite der Wandung des Primärkanals angrenzend geführt wird. Mit anderen Worten, das Gasmedium umgibt bzw. ummantelt das Pulvermedium innerhalb des Primärkanals, vorzugweise abschnittsweise oder über die volle Länge des Primärkanals. Weiterhin ist es bevorzugt vorgesehen, dass durch eine entsprechende konstruktive Maßnahme am zweiten Einlassbereich das Gasmedium derart beschleunigt wird, dass Verwirbelungen unmittelbar hinter dem ersten Einlassbereich in Strömungsrichtung gesehen entstehen, die wiederum für den erforderlichen Unterdruck sorgen, der für das Ansaugen des Pulvermediums aus der Pulverkammer verantwortlich ist. Es hat sich in überraschender Weise herausgestellt, dass es möglich ist, durch eine entsprechende Ausgestaltung, insbesondere Zuführung eines Gasmediums über den zweiten Einlassbereich, einen ausreichend großen Unterdruck zu realisieren, der es gestattet, das Pulvermedium aus der Pulverkammer herauszusaugen bzw. abzusaugen und so mit kinetischer Energie bzw. Geschwindigkeit auszustatten, dass das ausgangsseitig austretende Pulver-Gas-Gemisch beim Auftreffen auf die Zahnoberfläche ausreichend kinetische Energie aufweist, wodurch eine wirkungsvolle Abtragung von Verunreinigungen und Verfärbungen an der Zahnoberfläche möglich ist.

Als Gasmedium ist vorzugsweise Luft vorgesehen. Es kann sich allerdings auch um ein anderes Gas handeln, wie zum Beispiel Sauerstoff oder Stickstoff. Vorzugsweise ist der Primärkanal von einem Sekundärkanal umgeben, insbesondere in einem ausgangsseitigen Abschnitt des Düsenelements. Dabei stellt der Sekundärkanal ein Fluid zur Verfügung, das am Ausgang des Düsenelements dieses derart verlässt, dass es das am Ausgang austretende Pulver-Gas-Gemisch in bekannter Weise ummantelt. Dadurch kann in vorteilhafter Weise einer Staubentwicklung beim Auftreffen auf die Zahnoberfläche, verursacht durch das auftreffende Pulver-Gas-Gemisch, entgegengewirkt werden.

Gemäß einer bevorzugten Ausführungsform ist es vorgesehen, dass das Düsenelement einen sich entlang der Strömungsrichtung, insbesondere koaxial zum Primärkanal, erstreckenden Pulvereinleitkanal aufweist, der den ersten Einlassbereich als stirnseitige Öffnung bereitstellt. Durch das koaxiale Einführen über einen sich in Strömungsrichtung erstreckenden Pulvereinleitkanal ist es in vorteilhafter Weise möglich, die Wahrscheinlichkeit für ein Verklumpen bzw. Verstopfen dieses Pulvereinleitkanals zu verhindern bzw. zu reduzieren. Dabei ist es vorzugsweise vorgesehen, dass der Pulvereinleitkanal in den Primärkanal hineinragt. Vorzugsweise ragt der Pulvereinleitkanal entlang der Strömungsrichtung gemessen zwischen 0,5 mm und 2 mm in den Primärkanal hinein. Weiterhin ist es vorgesehen, dass der Pulvereinleitkanal, in Strömungsrichtung gesehen, unmittelbar vor dem Primärkanal ausgebildet ist, das heißt der Pulvereinleitkanal geht unmittelbar in den Primärkanal über.

Erfindungsgemäß ist es vorgesehen, dass das Düsenelement einen sich entlang der Strömungsrichtung, insbesondere koaxial zum Primärkanal, erstreckenden Gaseinleitkanal aufweist, der den Pulvereinleitkanal vorzugsweise ummantelt und den zweiten Einlassbereich bereitstellt. Vorzugsweise bildet dabei der Gaseinleitkanal einen zweiten Einlassbereich aus, dessen ringförmige Öffnung den ersten Einlassbereich des Pulvereinleitkanals umgibt. Dabei ist es bevorzugt vorgesehen, dass der erste Einlassbereich und der zweite Einlassbereich in Strömungsrichtung gesehen im Wesentlichen auf derselben Höhe angeordnet sind bzw. der zweite Einlassbereich ist in Strömungsrichtung etwas gegenüber dem ersten Einlassbereich zurückversetzt, vorzugsweise um 0,05 mm bis 2 mm. Dadurch ist es in vorteilhafter Weise möglich, dass die Kanten des Pulvereinleitkanals die Verwirbelung des eingeführten Gasmediums unterstützen, um so die Ausbildung des Unterdrucks zu bewirken. Vorzugsweise ist der Gaseinleitkanal derart ausgebildet, dass er dem Gasmedium vor Eintritt in den Primärkanal eine entsprechende Vorzugsrichtung entlang der Strömungsrichtung des Pulvermediums, insbesondere parallel zur Strömungsrichtung des Pulvermediums, insbesondere koaxial zum Primärkanal, vorgibt, wodurch eine Förderung des Gasmediums entlang der Innenseite der Wandung des Primärkanals unterstützt wird.

Weiter ist es vorgesehen, dass sich der Gaseinleitkanal in Richtung der Strömungsrichtung verjüngt, insbesondere unmittelbar vor dem zweiten Einlassbereich, das heißt ein verjüngender Teilabschnitt des Gaseinleitkanals grenzt unmittelbar an den zweiten Einlassbereich an. Durch den verjüngenden Teilabschnitt des Gaseinleitkanals ist es in vorteilhafter Weise möglich, das Gasmedium derart zu beschleunigen, dass die Unterdruckbildung im Bereich unmittelbar hinter dem ersten Einlassbereich hervorgerufen wird bzw. unterstützt wird. Dabei ist insbesondere der verjüngende Teilabschnitt durch eine Innenwandung ausgebildet, die angrenzend an den zweiten Einlassbereich unter Ausbildung eines Neigungswinkels gegenüber der Strömungsrichtung des Pulvermediums geneigt ist. Dabei bildet der Neigungswinkel einen Winkel zwischen 5° und 45°, 20° und 35° und besonders bevorzugt zwischen 30° und 35° aus. Weiterhin ist es bevorzugt vorgesehen, dass der verjüngende Teilabschnitt des Gaseinleitkanals in der letzten Hälfte bzw. im letzten Drittel bzw. besonders bevorzugt im letzten Viertel des Gaseinleitkanals in Strömungsrichtung des Gases gesehen ausgebildet ist, sodass im vorangehenden Abschnitt des Gaseinleitkanals für eine gewünschte Vorzugsausrichtung beim Eintritt über den zweiten Einlassbereich gesorgt wird.

Weiter ist es vorgesehen, dass der Pulvereinleitkanal, insbesondere auf Höhe des ersten Einlassbereichs, eine senkrecht zur Strömungsrichtung gemessene erste Ausdehnung aufweist, wobei die erste Ausdehnung vorzugsweise einen Wert zwischen 0,1 und 1,5 mm, bevorzugt zwischen 0,3 und 1 mm und besonders bevorzugt einen Wert von etwa 0,7 mm annimmt, und/oder der Gaseinleitkanal insbesondere auf Höhe des zweiten Einlassbereichs eine senkrecht zur Strömungsrichtung bemessene zweite Ausdehnung aufweist, wobei die zweite Ausdehnung vorzugsweise einen Wert zwischen 0,3 und 2 mm, bevorzugt zwischen 0,5 und 1,5 mm und besonders bevorzugt einen Wert von etwa 1,1 mm annimmt. Vorzugsweise ist es vorgesehen, dass ein Verhältnis der ersten Ausdehnung zur zweiten Ausdehnung einen Wert zwischen 0,7 und 1, bevorzugt zwischen 0,8 und 1 und besonders bevorzugt zwischen 0,9 und 1 annimmt. Mit anderen Worten, es wird eine vergleichsweise gering ausgebildete Querschnittsfläche zwischen dem Pulvereinleitkanal und dem Gaseinleitkanal ausgebildet, über die das Gasmedium in den Primärkanal eingeleitet wird, um für den entsprechenden Unterdruck zu sorgen und zudem Bestandteil des Pulver-Gas-Gemischs zu werden.

Vorzugsweise ist es vorgesehen, dass der Gaseinleitkanal einen zweiten Einlassbereich mit einer Querschnittsfläche zwischen 0,1 und 2 mm², bevorzugt zwischen 0,1 und 1 mm² und besonders bevorzugt einen Wert von im Wesentlichen 0,33 mm² aufweist. Es hat sich herausgestellt, dass es mit einem derartig dimensionierten Querschnitt, insbesondere bei der Bemessung eines Querschnitts mit 0,33 mm², möglich ist, ausreichende Saugwirkung zu erlangen, ohne zu viel Gas bereitzustellen, die andernfalls nachteilig wäre für die Zusammensetzung des Pulver-Gas-Gemischs.

Erfindungsgemäß ist es vorgesehen, dass der Gaseinleitkanal eine Länge zwischen 1 und 15 mm und besonders bevorzugt von etwa 7 mm aufweist. Im Gegensatz zum Gaseinleitkanal ist die Länge des Pulvereinleitkanals von untergeordneter Relevanz und ist insbesondere nur darauf abgestellt, ein Verklumpen bzw. ein Verstopfen zu verhindern. Im Falle des Gaseinleitkanals haben sich die oben genannten bzw. näher bezeichneten Dimensionierungen als vorteilhaft erwiesen, da sie für die ausreichende Beschleunigung entlang der Strömungsrichtung sorgen und eine entsprechende Vorzugsrichtung für das in den Primärkanal eintretende Gasmedium garantieren, ohne das Düsenelement in Strömungsrichtung gesehen überdimensionieren zu müssen.

Weiter ist es vorgesehen, dass das Düsenelement eine erste Versorgungsleitung zur Versorgung des Pulvereinleitkanals, eine zweite Versorgungsleitung zur Versorgung des Gaseinleitkanals und/oder eine dritte Versorgungsleitung zur Versorgung des Sekundärkanals aufweist, wobei bevorzugt die erste Versorgungsleitung, die zweite Versorgungsleitung und/oder die dritte Versorgungsleitung schräg zur Strömungsrichtung verläuft. Dadurch ist es möglich, ein vergleichsweise kompaktes Düsenelement bereitzustellen. Vorzugsweise ist es dabei vorgesehen, dass die zweite Versorgungsleitung dem Gaseinleitkanal das Gasmedium wahlweise koaxial verlaufend bereitstellt und/oder über entsprechende Bohrungen, die schräg zur Strömungsrichtung verlaufen.

Vorzugsweise ist es vorgesehen, dass die erste Versorgungsleitung und/oder die zweite Versorgungsleitung und/oder die dritte Versorgungsleitung ein Ventil, insbesondere ein Rückschlagventil, aufweist. Insbesondere für die erste Versorgungsleitung kann dadurch in vorteilhafter Weise sichergestellt werden, dass kein Rückstrom von Pulver aus dem Düsenelement in die Pulverkammer erfolgt, beispielsweise bei einem Verstopfen oder Blockieren des Düsenelements. Besonders vorteilhaft erweist sich das Rückschlagventil bzw. das Ventil, wenn der Betrieb des Düsenelements beendet bzw. unterbrochen wird. In diesem Fall wird nämlich die Luftzufuhr über die zweite Versorgungsleitung unterbrochen und in der Pulverkammer herrscht ein Unterdruck, der andernfalls das Pulver bzw. das Pulver-Gas-Gemisch wieder zurück in die Pulverkammer ziehen würde. Mittels des Ventils, insbesondere des Rückschlagventils, lässt sich dies einfach verhindern. Es ist auch vorstellbar, dass das Ventil in der ersten Versorgungsleitung automatisch, beispielsweise mittels einer Steuereinrichtung, geschlossen wird, bevor die Zufuhr eines Gases über die zweite Versorgungsleitung unterbrochen wird. Dadurch kann sichergestellt werden, dass kein Pulver in die Pulverkammer zurückgezogen wird.

Weiterhin ist es besonders bevorzugt vorgesehen, wenn in der zweiten Versorgungsleitung ein Ventil zum Einstellen eines Gasdrucks in der zweiten Versorgungsleitung vorgesehen ist. Insbesondere ist das Ventil in der zweiten Versorgungsleitung ein Ventil zum kontinuierlichen oder gestuften Einstellen der Gasdrucks, beispielsweise ein Drosselventil und/oder ein Proportionalventil. Die Integration eines solchen Ventils in die zweite Versorgungsleitung gestattet es die Gaszufuhr und somit die Strömungsverhältnisse im Düsenelement zu steuern, ohne Gefahr zu laufen, dass Pulver das Ventil verstopft. Entsprechend wird der Verschleiß des Ventils reduziert.

Weiterhin ist es vorgesehen, dass an das Düsenelement eine Gasquelle angebunden ist, insbesondere an die zweite Versorgungsleitung, wobei die Gasquelle vorzugsweise das Gasmedium mit einer Durchflussrate zwischen 5 und 35 nl/min, bevorzugt zwischen 8 und 15 nl/min und besonders bevorzugt von im Wesentlichen 12 nl/min bereitstellt. Es hat sich hierbei herausgestellt, dass es in vorteilhafter Weise möglich ist, einen Unterdruck mit derart vergleichsweise niedrigen Durchflussraten zu erzeugen. Dies ist insbesondere deswegen von Vorteil, weil eine zu hohe Luftmenge zu vermeiden ist, da ansonsten mit einem erhöhten Emphysem-Risiko zu rechnen wäre. Es hat sich insbesondere als vorteilhaft erwiesen, die Durchflussrate nicht höher als 35 nl/min einzustellen. Dabei hat sich herausgestellt, dass mit einer Durchflussrate von 12 nl/min bereits ein Unterdruck realisierbar ist, der ausreicht für die gewünschte Bereitstellung an kinetischer Energie für den Pulverstrahl bzw. das Pulver-Gas-Gemisch, ohne zu viel Gas im Pulver-Gas-Gemisch mitzuführen.

Ein weiterer Gegenstand der vorliegenden Erfindung ist ein Pulverstrahlgerät mit einem erfindungsgemäßen Düsenelement und einer Pulverkammer als Reservoir für das Pulvermedium. Alle für das Düsenelement beschriebenen Vorteile und Eigenschaften lassen sich analog auf das Pulverstrahlgerät übertragen und andersrum.

Vorzugsweise ist es vorgesehen, dass die Pulverkammer ein Mittel zur Versorgung der Pulverkammer mit Umgebungsluft aufweist. Beispielsweise handelt es sich bei dem Mittel zur Versorgung der Pulverkammer mit Umgebungsluft um eine Öffnung, beispielsweise eine verschließbare Öffnung, die bei Bedarf geöffnet werden kann, um eine Zuluft in die Pulverkammer zu gestatten, um einem sich andernfalls in der Pulverkammer ausbildenden Unterdruck entgegenzuwirken. Hierzu verfügt das Mittel zur Versorgung der Pulverkammer mit Umgebungsluft beispielsweise ein entsprechendes Ventilsystem. Vorzugsweise ist die Öffnung in der Pulverkammer, beispielsweise in einer Wandung des Pulverkammer, eingelassen. Dadurch, dass die Pulverkammer mit einem entsprechenden Mittel zur Versorgung der Pulverkammer mit Umgebungsluft versehen ist, ist es in vorteilhafter Weise möglich, nur eine Verbindung zwischen der Pulverkammer und der Basisstation bzw. dem Handgerät zu realisieren, insbesondere deswegen weil keine zusätzlich Gaszufuhr zur Pulverkammer erforderlich ist, die den Überdruck in der Pulverkammer kompensieren muss.

Zur Unterstützung des Unterdrucks, der den Pulverstrom veranlasst, ist es vorstellbar, dass in der Pulverkammer gezielt ein zusätzlicher Überdruck realisiert wird. Wegen des durch das Düsenelement erzeugten Unterdrucks reicht dabei ein Überdruck von z. B. höchstens 1 bar, bevorzugt höchstens 0,5 bar und besonders bevorzugt von höchstens 0,25 bar aus.

Ein weiterer Gegenstand der vorliegenden Erfindung ist ein Verfahren zur Nutzung eines erfindungsgemäßen Pulverstrahlgeräts, wobei ein Gasmedium über den zweiten Einlassbereich derart in den Primärkanal eingeführt wird, dass im Primärkanal ein Unterdruck erzeugt wird und das Pulvermedium aus der Pulverkammer über den ersten Einlassbereich in den Primärkanal gesaugt wird. Alle für das Düsenelement bzw. das Pulverstrahlgerät beschriebenen Vorteile und Eigenschaften gelten in analoger Weise für das Verfahren zur Nutzung des Pulverstrahlgeräts und andersrum. Insbesondere ist es in vorteilhafter Weise möglich, durch das Abstimmen des eingeleiteten Gasmediums, insbesondere dessen Drucks, und den konstruktiven Maßnahmen am zweiten Einlassbereich bzw. am Gaseinleitkanal, den gewünschten Effekt des Unterdrucks im Primärkanal, insbesondere hinter dem ersten Einlassbereich, zu bewirken.

Weitere Vorteile und Eigenschaften ergeben sich aus der nachfolgenden Beschreibung bevorzugter Ausführungsformen des erfindungsgemäßen Gegenstands mit Bezug auf die beigefügten Figuren. Es zeigt:
- **Fig.1**: Düsenelement gemäß einer ersten bevorzugten Ausführungsform der vorliegenden Erfindung
- Fig.2:: Primärkanal für ein Düsenelement gemäß einer zweiten bevorzugten Ausführungsform der vorliegenden Erfindung
- Fig. 3: weiterer Primärkanal für ein Düsenelement gemäß einer dritten bevorzugten Ausführungsform und
- **Fig.4:**: Düsenelement gemäß einer dritten bevorzugten Ausführungsform der vorliegenden Erfindung

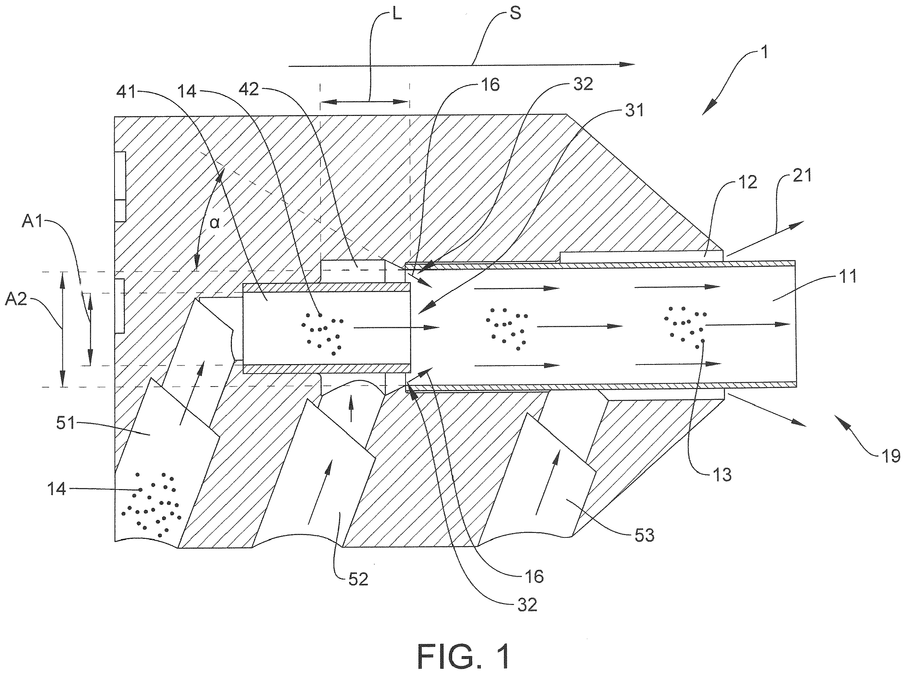

In **Fig. 1** ist ein Düsenelement 1 gemäß einer bevorzugten ersten Ausführungsform der vorliegenden Erfindung dargestellt. Ein solches Düsenelement 1 ist insbesondere Teil eines Pulverstrahlgeräts (nicht dargestellt), das dazu vorgesehen ist, mittels eines Pulverstrahls eine Zahnoberfläche zu reinigen. Hierzu verlässt der Pulverstrahl in Form eines Pulver-Gas-Gemisches 13 einen Ausgang 19 des Düsenelements 1. Dabei ist das Düsenelement 1 vorzugsweise in ein Handgerät (nicht dargestellt) eingelassen, sodass sich der Pulverstrahl bzw. das Pulver-Gas-Gemisch 13 entsprechend auf die Zahnoberfläche zu dessen Reinigung ausrichten lässt. Ein weiterer Bestandteil eines solchen Pulverstrahlgeräts ist eine Pulverkammer (nicht dargestellt), die das Pulver bzw. Pulver-Gas-Gemisch 13 dem Handgerät, insbesondere dem Düsenelement 1, zur Verfügung stellt bzw. das Düsenelement 1 mit Pulver bzw. dem Pulver-Gas-Gemisch 13 versorgt. In den aus dem Stand der Technik bekannten Pulverstrahlgeräten ist es vorgesehen, dass in der Pulverkammer, die typischerweise zylindrisch ausgebildet ist und austauschbar an einer Basisstation montierbar ist, ein Pulver-Gas-Gemisch 13, beispielsweise mittels eines Venturi-Effekts, realisiert wird und derart unter Druck gesetzt wird, dass das Pulver-Gas-Gemisch 13 nicht nur bis zum Düsenelement 1 befördert wird, sondern das Düsenelement 1 mit ausreichend kinetischer Energie bzw. Geschwindigkeit verlässt, dass eine wirkungsvolle abrasive Wirkung an der Zahnoberfläche bewirkt wird. Bei einer derartigen Vorgehensweise ist es allerdings erforderlich, dass die Pulverkammer eine entsprechend dicke Wandung bzw. im Schnittstellenbereich zur Basisstation eine entsprechende Verbindungsmechanik aufweist, die dem in der Kammer entstehenden Druck standhält. In entsprechender Weise sind hohe konstruktive Anforderungen an Material und Verbindungsmechanismus der Pulverkammer gegeben.

Zur Vereinfachung, insbesondere zur konstruktiven Vereinfachung, des Pulverstrahlgeräts, ist es in dem Düsenelement 1 aus Fig. 1 vorgesehen, dass einem Primärkanal 11, der das Pulver-Gas-Gemisch 13 entlang einer Strömungsrichtung S befördert, über einen ersten Einlassbereich 31 ein Pulvermedium 14 und ein Gasmedium 16 über einen zweiten Einlassbereich 32 bereitgestellt wird, bevor das Pulver-Gas-Gemisch 13 das Düsenelement 1 über den Ausgang 19 verlässt. Insbesondere ist es vorgesehen, dass der erste Einlassbereich 31 und der zweite Einlassbereich 32 separat ausgebildet sind, sodass das Pulvermedium 14 separat vom Gasmedium 16 in den Primärkanal 11 eingeführt wird. Insbesondere ist es vorgesehen, dass der zweite Einlassbereich 32 derart ausgestaltet ist, dass im Primärkanal 11, insbesondere in Strömungsrichtung S gesehen hinter dem ersten Einlassbereich 31, ein Unterdruck gebildet wird. Dieser Unterdruck wird insbesondere derart realisiert bzw. ausgelegt, dass ein Ansaugen des Pulvermediums 14 aus der Pulverkammer möglich ist. Infolgedessen ist es vorgesehen, dass das für den Ausgang 19 des Düsenelements 1 vorgesehene Pulver-Gas-Gemisch 13 nicht durch Unterdrucksetzen der Pulverkammer bereits in der Pulverkammer entsteht, sondern erst im Primärkanal 11. Das Pulvermedium 14 wird dabei aus der Pulverkammer über eine erste Versorgungsleitung 51 durch den Unterdruck im Primärkanal 11 angesaugt, insbesondere derart angesaugt, dass das den Ausgang 19 verlassende Pulver-Gas-Gemisch 13 eine ausreichende Geschwindigkeit aufweist, um effektiv die Zahnoberfläche reinigen zu können. Für den Fachmann ist es ersichtlich, dass unter einem Pulvermedium 14 eine Vorstufe zum späteren Pulver-Gas-Gemisch 13 zu verstehen ist, bei dem zumindest ein geringer Anteil an Gas bereits existent ist, allerdings nicht dem Gasanteil entspricht, bei dem im Primärkanal 11 geführten bzw. am Ausgang 19 austretenden Pulver-Gas-Gemisch 13 erreicht wird.

Zur Ausbildung eines Unterdrucks wird in Fig. 1 bzw. im Ausführungsbeispiel der Fig. 1 ein Gaseinleitkanal 42 genutzt, der einen Pulvereinleitkanal 41 umgibt. Insbesondere sind der Gaseinleitkanal 42 und der Pulvereinleitkanal 41 konzentrisch zueinander angeordnet und weisen an ihren stirnseitigen Enden, die dem Primärkanal 11 zugewandt sind, jeweils den ersten Einlassbereich 31 und den zweiten Einlassbereich 32 auf. Insbesondere wird der zweite Einlassbereich 32 in der dargestellten Ausführungsform durch einen ringförmigen Spalt ausgebildet, der sich zwischen dem Pulvereinleitkanal 41 einerseits und dem Gaseinleitkanal 42 und/oder dem Primärkanal 11 andererseits ausbildet. In dieser geometrischen Anordnung ist es möglich, dass das über den zweiten Einlassbereich 32 eingeführte Gasmedium 16 entlang einer Innenseite des Primärkanals 11 in diesen hineinströmt und insbesondere sich entlang der Innenseite bzw. Wandung des Primärkanals 11 entlang der Strömungsrichtung S fortsetzt. Durch einen verjüngenden Abschnitt im Gaseinleitkanal 42, insbesondere unmittelbar vor dem zweiten Einlassbereich 32, ist es in vorteilhafter Weise möglich, das Gasmedium 16 zu beschleunigen, wodurch in Strömungsrichtung S gesehen hinter dem ersten Einlassbereich 31 eine Verwirbelung des eingeführten Gasmediums 16 entsteht. Dadurch wird wiederum der gewünschte Unterdruck erzielt. Dabei wird das Gasmedium 16 vorzugsweise von einer Gasquelle (nicht dargestellt) bereitgestellt, die über eine zweite Versorgungsleitung 52 mit dem Gaseinleitkanal 42 verbunden ist. Dabei ist es vorstellbar, dass das Gasmedium 16 in den Gaseinleitkanal 42 koaxial eingeführt wird und/oder über entsprechende Bohrungen. Weiterhin ist es bevorzugt vorgesehen, dass der Pulvereinleitkanal 41, insbesondere auf Höhe des ersten Einlassbereichs 31, eine senkrecht zur Strömungsrichtung S bemessene erste Ausdehnung A1 aufweist, wobei die erste Ausdehnung A1 vorzugsweise einen Wert zwischen 0,1 und 1,5 mm, bevorzugt zwischen 0,3 und 1 mm und besonders bevorzugt einen Wert von etwa 0,7 mm annimmt. Weiterhin ist es bevorzugt vorgesehen, dass der Gaseinleitkanal 42 insbesondere auf Höhe des zweiten Einlassbereichs 32 eine senkrecht zur Strömungsrichtung S bemessene zweite Ausdehnung A2 aufweist, wobei die zweite Ausdehnung A2 vorzugsweise einen Wert zwischen 0,3 und 2 mm, bevorzugt zwischen 0,5 und 1,5 mm und besonders bevorzugt einen Wert von etwa 1,1 mm annimmt.

Darüber hinaus ist es bevorzugt vorgesehen, dass der Gaseinleitkanal 42 einen zweiten Einlassbereich 32 mit einer Querschnittsfläche zwischen 0,1 und 2 mm², bevorzugt zwischen 0,1 und 1 mm² und besonders bevorzugt einen Wert von im Wesentlichen 0,33 mm² aufweist. Ferner ist es bevorzugt vorgesehen, dass der Gaseinleitkanal 42 eine Länge L zwischen 1 und 20 mm, bevorzugt zwischen 1 und 15 mm und besonders bevorzugt von etwa 7 mm aufweist. Weiterhin ist es besonders bevorzugt vorgesehen, dass ein an den zweiten Einlassbereich 32 angrenzender verjüngender Teilabschnitt des Gaseinleitkanals 42 eine in Strömungsrichtung S bemessene Teillänge aufweist, die im Wesentlichen dem 0,05-bis 0,4-fachen der in Strömungsrichtung S bemessenen Länge L des Gaseinleitkanals 42 entspricht. Weiterhin ist es bevorzugt vorgesehen, dass eine Innenseite des verjüngenden Teilabschnitts des Gaseinleitkanals 42 derart verläuft, dass die Innenseite gegenüber der Strömungsrichtung S einen Neigungswinkel α ausbildet, wobei der Neigungswinkel α einen Wert zwischen 20° und 25°, bevorzugt zwischen 30 und 40° und besonders bevorzugt etwa 35° annimmt.

In dem in Figur 1 dargestellten Ausführungsbeispiel ist neben dem Primärkanal 11 zusätzlich ein Sekundärkanal 12 vorgesehen. Der Sekundärkanal 12 ummantelt den Primärkanal 11 zumindest abschnittsweise und dient insbesondere dem Bereitstellen eines Fluids 21, beispielsweise Wasser, wobei der Sekundärkanal 12 derart ausgestaltet ist, dass das den Sekundärkanal 12 verlassende Fluid 21 das Pulver-Gas-Gemisch 13, das den Primärkanal am Ausgang 19 verlässt, ummantelt. Dadurch ist es in vorteilhafter Weise möglich, einer Staubentwicklung beim Auftreffen des Pulver-Gas-Gemisches 13 auf der Zahnoberfläche entgegenzuwirken. Dabei ist es ferner vorgesehen, dass dem zweiten Sekundärkanal 12 über eine dritte Versorgungsleitung 53 das Fluid 21 bereitgestellt wird. Vorzugsweise ist es vorgesehen, dass die erste Versorgungsleitung 51, die zweite Versorgungsleitung 52 und/oder die dritte Versorgungsleitung 53 schräg zur Strömungsrichtung S verläuft, wodurch in vorteilhafter Weise ein vergleichsweise kompaktes Düsenelement 1 bereitgestellt werden kann.

Vorzugsweise ist es vorgesehen, dass der Pulvereinleitkanal 41, insbesondere mit seiner stirnseitigen Öffnung, die den ersten Einlassbereich 31 bereitstellt, in den Primärkanal 11 hineinragt. Weiterhin ist es vorgesehen, dass der Primärkanal 11 gegenüber dem Sekundärkanal 12 am Ausgang 19 des Düsenelements 1 vorsteht. Vorzugsweise stellt die Gasquelle das Gasmedium 16 derart unter Druck bereit, dass das Gasmedium 16 mit einer Durchflussrate zwischen 5 und 35 nl/min, bevorzugt zwischen 8 und 15 nl/min und besonders bevorzugt von im Wesentlichen 12 nl/min, insbesondere am zweiten Einlassbereich 32, bereitgestellt wird.

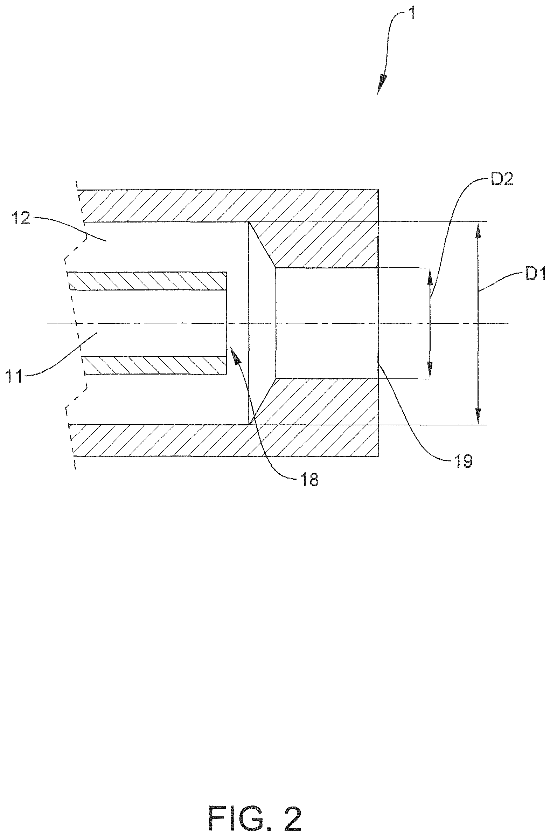

In **Fig. 2** ist eine Anordnung eines Primärkanals 11 und eines Sekundärkanals 12 für ein Düsenelement 1 gemäß einer zweiten bevorzugten Ausführungsform der vorliegenden Erfindung dargestellt. Dabei ersetzt diese Anordnung aus dem Primärkanal 11 und dem Sekundärkanal 12 den ausgangsseitigen Abschnitt des Düsenelements 1 aus dem Ausführungsbeispiel der Figur 1. Insbesondere ist es in dem Ausführungsbeispiel der Fig. 2 vorgesehen, dass der Sekundärkanal 12 in Strömungsrichtung S gesehen gegenüber der Austrittsöffnung 18 des Primärkanals 11 vorsteht, insbesondere hinter der Austrittsöffnung 18 in Strömungsrichtung S gesehen zunächst verjüngt und dann den zweiten Durchmesser D2, der in Strömungsrichtung S bis zum Ausgang 19 konstant bleibt, aufweist. Dabei verjüngt der Sekundärkanal 12 von einem ersten Durchmesser D1 auf Höhe des Primärkanals 11, auf einen zweiten Durchmesser D2. Durch das Verjüngen wird das im Sekundärkanal 12 geführte Fluid beschleunigt und ummantelt das über die Austrittsöffnung 18 heraustretende Pulver-Gas-gemisch 13 unter Ausbildung eines Pulverstrahls mit vergleichsweise hoher Austrittsenergie am Ausgang 19 des Düsenelements 1. Hinsichtlich der spezifischen Ausgestaltung dieses ausgangsseitigen Abschnitts des Düsenelements 1 wird explizit Bezug genommen auf den Offenbarungsgehalt der WO 2018 108 622 A1.

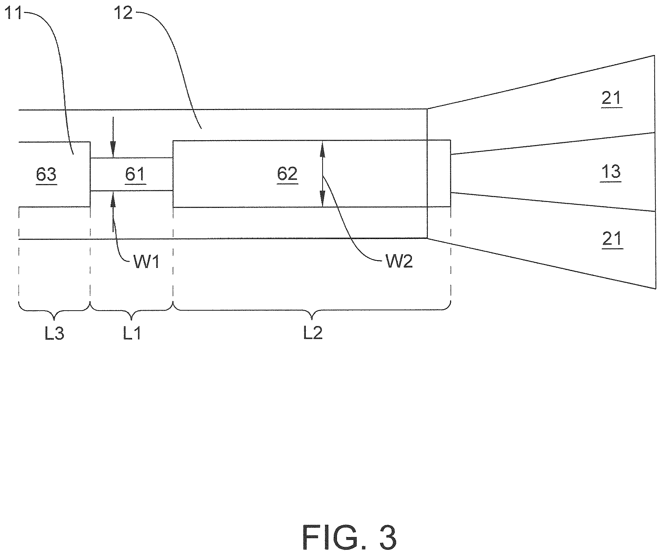

In **Fig. 3** ist eine weitere Anordnung aus Primärkanal 11 und Sekundärkanal 12 für ein Düsenelement 1 gemäß einer dritten bevorzugten Ausführungsform der vorliegenden Erfindung dargestellt. Wie in Fig. 2 schließt diese Anordnung vorzugsweise in Strömungsrichtung S gesehen hinter dem Bereich an, in dem der Unterdruck ausgebildet wird bzw. der dem Ansaugen des Pulvermediums 14 aus dem Pulverbehälter bzw. der Pulverkammer dient. Dabei ist es insbesondere vorgesehen, dass der in Fig. 3 dargestellte ausgangsseitige Abschnitt des Düsenelements 1 einen ersten Abschnitt 61 mit einer ersten Weite W1 und einen zweiten Abschnitt 62 mit einer zweiten Weite W2 aufweist. Dabei ist es vorgesehen, dass die erste Weite W1 kleiner ist als die zweite Weite W2. Zudem weist der zweite Abschnitt eine zweite Länge L2 auf, die größer ist als eine erste Länge L1 des ersten Abschnitts 61. Darüber hinaus ist es bevorzugt vorgesehen, dass in Strömungsrichtung S vor dem ersten Abschnitt 61 ein dritter Abschnitt 3 vorgesehen ist, der eine dritte Länge L3 aufweist. Durch die Verjüngung im ersten Abschnitt 61 wird eine Beschleunigung des Pulver-Gas-Gemisches 13 und durch den breiteren zweiten Abschnitt 62 mit der zweiten Weite W2 eine Aufweitung des Pulverstrahls veranlasst, wodurch eine Querschnittsfläche des Pulver-Gas-Gemischs 13 beim Auftreffen auf dem Zahn gezielt vergrößert werden kann. Dadurch wird verhindert, dass die Zahnoberfläche beschädigt wird bzw. ein zu großer Abtrag an der Zahnoberfläche stattfindet.

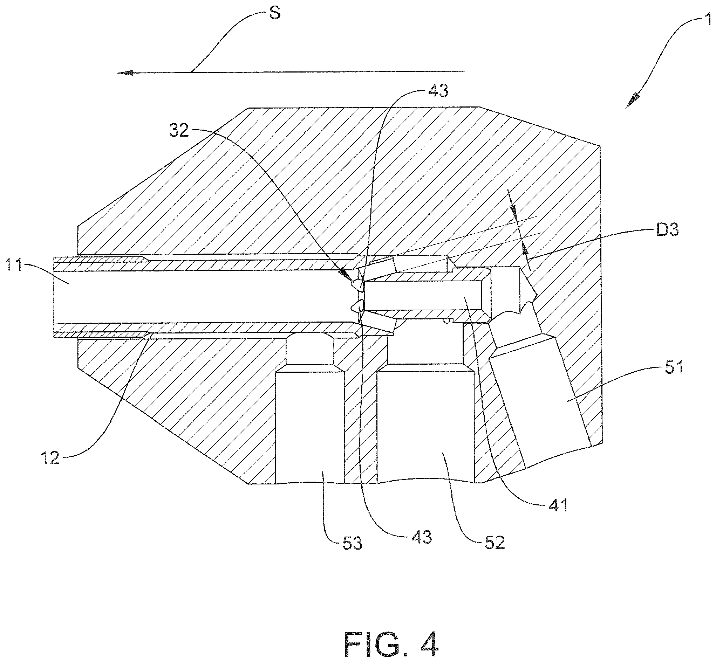

In **Fig. 4** ist ein Düsenelement 1 gemäß einer vierten bevorzugten Ausführungsform der vorliegenden Erfindung dargestellt. Dabei unterscheidet sich das Düsenelement 1 aus Figur 4 im Wesentlichen nur dahingehend, dass der zweite Einlassbereich 32 nicht als umlaufender Ring ausgebildet ist, sondern durch eine Mehrzahl an Gaseinleitöffnungen 43, vorzugsweise durch eine Mehrzahl an gleichmäßig entlang einer Umlaufrichtung verteilter Gaseinleitöffnungen 43. Insbesondere sind zwei bis acht Gaseinleitöffnungen 43 vorgesehen. Dabei weisen diese Gaseinleitöffnungen 43 jeweils einen dritten Durchmesser D3 auf, der einen Wert zwischen 0,01 und 1 mm, bevorzugt zwischen 0,03 und 0,75 und besonders bevorzugt zwischen 0,05 mm und 0,5 mm annimmt. Dabei können sich die dritten Durchmesser D3 voneinander unterscheiden oder identisch sein. Die Gaseinleitöffnungen 43 sind ferner bevorzugt rund ausgebildet. Insbesondere lässt sich der Summe aller Gaseinleitöffnungen 43 zur Ausbildung des zweiten Einlassbereichs 32 eine Querschnittsfläche zuordnen, die einen Wert zwischen 0,05 und 2 mm², bevorzugt zwischen 0,1 und 1 mm² und besonders bevorzugt 0,33 mm² annimmt.

### Bezugszeichenliste:

- 1: Düsenelement
- 11: Primärkanal
- 12: Sekundärkanal
- 13: Pulver-Gas-Gemisch
- 14: Pulvermedium
- 16: Gasmedium
- 18: Austrittsöffnung
- 19: Ausgang
- 21: Fluid
- 31: erster Einlassbereich
- 32: zweiter Einlassbereich
- 41: Pulvereinleitkanal
- 42: Gaseinleitkanal
- 43: Gaseinleitöffnung
- 51: erste Versorgungsleitung
- 52: zweite Versorgungsleitung
- 53: dritte Versorgungsleitung
- 61: erster Abschnitt
- 62: zweiter Abschnitt
- 63: dritter Abschnitt
- S: Strömungsrichtung
- L: Länge
- L1: erste Länge
- L2: zweite Länge
- L3: dritte Länge
- A1: erste Ausdehnung
- A2: zweite Ausdehnung
- W1: erste Weite
- W2: zweite Weite
- D1: erster Durchmesser
- D2: zweiter Durchmesser
- D3: dritter Durchmesser
- α: Neigungswinkel

## Patentansprüche

1. Düsenelement (1) für ein Pulverstrahlgerät, das für Zahnbehandlungen vorgesehen ist, wobei das Düsenelement einen Primärkanal (11) zur Führung eines Pulver-Gas-Gemischs (13) entlang einer Strömungsrichtung (S) umfasst ,
wobei das Düsenelement (1) einen ersten Einlassbereich (31) zum Einführen eines Pulvermediums (14) und einen zweiten Einlassbereich (32) zum Einführen eines Gasmediums (16), umfasst,
wobei der zweite Einlassbereich (32) derart konfiguriert ist, dass während des Betriebs des Düsenelements (1) beim Einleiten des Gasmediums (16) über den zweiten Einlassbereich (32) im Primärkanal (11)in Strömungsrichtung (S) gesehen hinter dem ersten Einlassbereich (31) ein Unterdruck zum Ansaugen des Pulvermediums (14) ausbildbar ist, wobei das Düsenelement (1) einen sich entlang der Strömungsrichtung (S) ersteckenden Gaseinleitkanal (42) aufweist, der den zweiten Einlassbereich (32) bereitstellt, **dadurch gekennzeichnet, dass** der Gaseinleitkanal (42) eine Länge zwischen 1 und 15 mm aufweist.

2. Düsenelement (1) gemäß Anspruch 1, wobei das Düsenelement (1) einen sich entlang der Strömungsrichtung (S), insbesondere koaxial zum Primärkanal (11), ersteckenden Pulvereinleitkanal (41) aufweist, der den ersten Einlassbereich (31) als stirnseitige Öffnung bereitstellt.

3. Düsenelement (1) gemäß einem der vorhergehenden Ansprüche, wobei der Gaseinleitkanal (42) in Richtung der Strömungsrichtung (S) verjüngt, insbesondere unmittelbar vor dem zweiten Einlassbereich (32).

4. Düsenelement (1) gemäß einem der vorhergehenden Ansprüche, wobei
- der Pulvereinleitkanal (41), insbesondere auf Höhe des ersten Einlassbereichs (31), eine senkrecht zur Strömungsrichtung (S) bemessene erste Ausdehnung (A1) aufweist, wobei die erste Ausdehnung (A1) vorzugsweise einen Wert zwischen 0,1 und 1,5 mm, bevorzugt zwischen 0,3 und 1 mm und besonders bevorzugt einen Wert von etwa 0,7 mm annimmt, und/oder
- der Gaseinleitkanal (42), insbesondere auf Höhe des zweiten Einlassbereichs (32), eine senkrecht zur Strömungsrichtung (S) bemessene zweite Ausdehnung (A2) aufweist, wobei die zweite Ausdehnung (A2) vorzugsweise einen Wert zwischen 0,3 und 2 mm, bevorzugt zwischen 0,5 und 1,5 mm und besonders bevorzugt einen Wert von etwa 1,1 mm annimmt und/oder
- der zweite Einlassbereich (32) eine Querschnittsfläche zwischen 0,1 und 2 mm², bevorzugt zwischen 0,1 und 1 mm² und besonders bevorzugt einem Wert von im Wesentlichen 0,33 mm² aufweist.

5. Düsenelement (1) gemäß einem der vorhergehenden Ansprüche, wobei der Gaseinleitkanal (42) eine Länge (L) von etwa 7 mm aufweist.

6. Düsenelement (1) gemäß einem der vorhergehenden Ansprüche, wobei das Düsenelement (1) eine erste Versorgungsleitung (51) zur Versorgung des Pulvereinleitkanals (41), eine zweite Versorgungsleitung (52) zur Versorgung des Gaseinleitkanals (42) und/oder eine dritte Versorgungsleitung (53) zur Versorgung eines Sekundärkanals (12), welcher zur Führung eines Fluids ausgebildet ist, aufweist, wobei die erste Versorgungsleitung (51), die zweite Versorgungsleitung (52) und/oder die dritte Versorgungsleitung (53) ein Ventil, beispielsweise ein Rückschlagventil oder ein Drosselventil, aufweist.

7. Pulverstrahlgerät mit einem Düsenelement (1) gemäß einem der vorhergehenden Ansprüche und einer Pulverkammer als Reservoir für das Pulvermedium (14).

8. Pulverstrahlgerät gemäß Anspruch 7, wobei die Pulverkammer ein Mittel zur Versorgung der Pulverkammer mit Umgebungsluft aufweist.

## Claims

1. A nozzle element (1) for a powder jet device intended for dental treatments, the nozzle element comprising a primary channel (11) for guiding a powder-gas mixture (13) along a flow direction (S),
wherein the nozzle element (1) comprises a first inlet region (31) for loading a powder medium (14) and a second inlet region (32) for loading a gas medium (16), wherein the second inlet region (32) is configured in such a way that during operation of the nozzle element (1), when the gas medium (16) is introduced via the second inlet region (32) in the primary channel (11), a negative pressure can be formed behind the first inlet region (31), as viewed in the flow direction (S), in order to suck in the powder medium (14), wherein the nozzle element (1) comprises a gas inlet channel (42) extending along the flow direction (S) and providing the second inlet region (32), **characterized in that** the gas inlet channel (42) has a length of between 1 and 15 mm.

2. The nozzle element (1) according to claim 1, wherein the nozzle element (1) comprises a powder inlet channel (41) extending along the flow direction (S), in particular coaxially to the primary channel (11), which provides the first inlet region (31) as a frontal opening.

3. The nozzle element (1) according to any one of the preceding claims, wherein the gas inlet channel (42) tapers in the direction of the flow direction (S), in particular immediately upstream of the second inlet region (32).

4. The nozzle element (1) according to one of the preceding claims, wherein
- the powder inlet channel (41), in particular at the level of the first inlet region (31), comprises a first extension (A1) dimensioned perpendicularly to the flow direction (S), the first extension (A1) preferably assuming a value between 0.1 and 1.5 mm, preferably between 0.3 and 1 mm and most preferably a value of approximately 0.7 mm, and/or
- the gas inlet channel (42), in particular at the level of the second inlet region (32), comprises a second extension (A2) dimensioned perpendicular to the flow direction (S), the second extension (A2) preferably assuming a value between 0.3 and 2 mm, preferably between 0.5 and 1.5 mm and most preferably a value of about 1.1 mm, and/or
- the second inlet region (32) comprises a cross-sectional area of between 0.1 and 2 mm², preferably between 0.1 and 1 mm² and most preferably a value of substantially 0.33 mm².

5. The nozzle element (1) according to any one of the preceding claims, wherein the gas inlet channel (42) comprises a length (L) of about 7 mm.

6. The nozzle element (1) according to one of the preceding claims, wherein the nozzle element (1) comprises a first supply line (51) for supplying the powder inlet channel (41), a second supply line (52) for supplying the gas inlet channel (42) and/or a third supply line (53) for supplying a secondary channel (12), which is designed to direct a fluid, wherein the first supply line (51), the second supply line (52) and/or the third supply line (53) comprises a valve, for example a non-return valve or a throttle valve.

7. Powder jet device comprising a nozzle element (1) according to any one of the preceding claims and a powder chamber as a reservoir for the powder medium (14).

8. The powder jet device according to claim 7, wherein the powder chamber comprises a means for supplying ambient air to the powder chamber.

## Revendications

1. Elément de buse (1) pour un appareil à jet de poudre prévu pour des traitements dentaires,
dans lequel
l'élément de buse comprend un canal primaire (11) conçu pour acheminer un mélange de poudre et de gaz (13) le long d'une direction d'écoulement (S), l'élément de buse (1) présente une première zone d'entrée (31) pour introduire un fluide pulvérulent (14), et une deuxième zone d'entrée (32) pour introduire un fluide gazeux (16),
la deuxième zone d'entrée (32) est configurée de telle sorte que, pendant le fonctionnement de l'élément de buse (1), lors de l'introduction du fluide gazeux (16) par l'intermédiaire de la deuxième zone d'entrée (32), une dépression destinée à aspirer le fluide pulvérulent (14) peut être formée dans le canal primaire (11) derrière la première zone d'entrée (31), vue dans la direction d'écoulement (S),
l'élément de buse (1) comprend un canal d'introduction de gaz (42) qui s'étend le long de la direction d'écoulement (S) et qui présente la deuxième zone d'entrée (32),
**caractérisé en ce que**
le canal d'introduction de gaz (42) présente une longueur comprise entre 1 et 15 mm.

2. Elément de buse (1) selon la revendication 1,
dans lequel l'élément de buse (1) comprend un canal d'introduction de poudre (41) qui s'étend le long de la direction d'écoulement (S), en particulier coaxialement au canal primaire (11), et qui présente la première zone d'entrée (31) comme ouverture frontale.

3. Elément de buse (1) selon l'une des revendications précédentes,
dans lequel le canal d'introduction de gaz (42) se rétrécit dans le sens de la direction d'écoulement (S), en particulier immédiatement avant la deuxième zone d'entrée (32).

4. Elément de buse (1) selon l'une des revendications précédentes,
dans lequel
- le canal d'introduction de poudre (41) présente, en particulier au niveau de la première zone d'entrée (31), une première extension (A1) dimensionnée perpendiculairement à la direction d'écoulement (S), la première extension (A1) prenant de préférence une valeur comprise entre 0,1 et 1,5 mm, de préférence entre 0,3 et 1 mm et de manière particulièrement préférée une valeur d'environ 0,7 mm, et/ou
- le canal d'introduction de gaz (42) présente, en particulier au niveau de la deuxième zone d'entrée (32), une deuxième extension (A2) dimensionnée perpendiculairement à la direction d'écoulement (S), la deuxième extension (A2) prenant de préférence une valeur comprise entre 0,3 et 2 mm, de préférence entre 0,5 et 1,5 mm et de manière particulièrement préférée une valeur d'environ 1,1 mm, et/ou
- la deuxième zone d'entrée (32) présente une surface de section transversale comprise entre 0,1 et 2 mm², de préférence entre 0,1 et 1 mm² et de manière particulièrement préférée une valeur sensiblement égale à 0,33 mm².

5. Elément de buse (1) selon l'une des revendications précédentes,
dans lequel le canal d'introduction de gaz (42) présente une longueur (L) d'environ 7 mm.

6. Elément de buse (1) selon l'une des revendications précédentes,
dans lequel l'élément de buse (1) comprend une première conduite d'alimentation (51) pour alimenter le canal d'introduction de poudre (41), une deuxième conduite d'alimentation (52) pour alimenter le canal d'introduction de gaz (42) et/ou une troisième conduite d'alimentation (53) pour alimenter un canal secondaire (12) conçu pour acheminer un fluide, la première conduite d'alimentation (51), la deuxième conduite d'alimentation (52) et/ou la troisième conduite d'alimentation (53) comprenant une vanne, par exemple un clapet anti-retour ou une vanne d'étranglement.

7. Appareil à jet de poudre comprenant un élément de buse (1) selon l'une des revendications précédentes et une chambre à poudre servant de réservoir pour le fluide pulvérulent (14).

8. Appareil à jet de poudre selon la revendication 7,
dans lequel la chambre à poudre comprend un moyen d'alimentation de la chambre à poudre en air ambiant.
